# FASCICULE DE BREVET EUROPEEN

(11) **EP 2 195 198 B1**
(45) Date de publication et mention de la délivrance du brevet: **09.03.2011**
(21) Numéro de dépôt: 08836554.9
(22) Date de dépôt: 08.09.2008
(51) Int. Cl.: B60R 19/12

(54) **PARE-CHOCS COMPRENANT UNE BORDURE INFERIEURE ET UNE GRILLE D'ENTREE D'AIR**
STOSSDÄMPFER MIT NIEDRIGER KANTE UND LUFTEINLASSGITTER
BUMPER COMPRISING A LOWER BORDER AND AN AIR INLET GRILLE

(30) Priorité: 10.09.2007 FR 0757470
(43) Date de publication de la demande: 16.06.2010
(73) Titulaire: Compagnie Plastic Omnium, 69007 Lyon (FR)
(72) Inventeur: GINJA, Stéphane, F-01500 AMBERIEU EN BUGEY (FR); CHERON, Hugues, F-01800 MEXIMIEUX (FR); STRUSS, Martin, F-84103 BRATISLAVA (SK)
(74) Mandataire: Remy, Vincent Noel Paul
(86) Numéro de dépôt international: PCT/FR2008/051597
(87) Numéro de publication internationale: WO 2009/044062

(56) Documents cités:
- EP-A- 1 038 732
- EP-A- 1 314 614
- WO-A-2004/087487
- WO-A-2006/008137
- FR-A- 2 635 489
- US-B1- 6 513 843

## Description

La présente invention concerne le domaine technique des pare-chocs de véhicule automobile. Plus particulièrement, l'invention concerne un pare-chocs destiné à traiter les chocs avec un piéton.

Le document FR 2 791 311 divulgue sur sa figure 6 un pare-chocs comprenant un carénage, également appelé convergent ou spoiler, situé en partie inférieure du pare-chocs et destiné à entrer en contact avec le tibia d'un piéton lors d'un choc avec ce dernier.

Le carénage comprend, à l'avant, une bordure présentant un profil en C avec une paroi supérieure sensiblement horizontale, une paroi médiane sensiblement verticale dont la face extérieure est immédiatement visible depuis l'avant du pare-chocs et une paroi inférieure sensiblement horizontale. La paroi médiane est la partie du carénage qui impacte le tibia d'un piéton en cas de choc. A cet effet, elle est soutenue par un profilé métallique en contact avec sa face intérieure.

Pour simplifier la conception de ce carénage, notamment en le rendant d'un seul tenant, il est connu de remplacer le profilé métallique par des nervures venues de moulage avec le carénage et perpendiculaires à la paroi médiane de la partie frontale.

Cette solution présente l'inconvénient qu'elle fait apparaître des retassures sur la face extérieure visible de la paroi médiane. Un pare-chocs comprenant une bordure inférieure et une grille d'entrée d'air est divulgué dans le EP 1038732

L'invention a pour but de proposer un pare-chocs qui ne présente pas l'inconvénient sus-cité.

A cet effet, l'invention a pour objet un pare-chocs en matière plastique d'un véhicule automobile, comprenant :
- une bordure inférieure,
- une grille d'entrée d'air située au dessus de la bordure, la grille comprenant au moins une partie dont l'avant vient sensiblement à la verticale de la bordure inférieure,
- une pièce de transmission d'efforts à la structure du véhicule, agencée de sorte qu'en cas de choc du pare-chocs avec un tibia d'un bas de jambe de piéton, la bordure inférieure prend appui contre cette pièce pour transmettre à la structure une partie des efforts résultant du choc,
- une pièce de transmission d'efforts à la structure du véhicule, agencée de sorte qu'en cas de choc du pare-chocs avec le tibia d'un piéton, l'arrière de la grille prend appui contre cette pièce pour transmettre à la structure une autre partie des efforts résultant du choc.

La bordure inférieure correspond à la partie frontale du carénage du document FR 2 791 311.

Ainsi, grâce à l'invention, il est possible de fabriquer un pare-chocs capable de traiter les chocs avec un piéton et qui ne présente pas de retassures. En effet, du fait que les efforts en cas de choc piéton sont repris en partie par la grille d'entrée d'air, il est possible de ne pas nervurer la bordure.

On notera que les pièces de reprise d'efforts sont spécialement agencées pour former un appui de la bordure ou de l'arrière de la grille et reprendre des efforts dès le début du choc. Ces pièces de reprise d'efforts sont à distinguer d'autres pièces de l'avant du véhicule (par exemple un radiateur) et contre lesquelles la bordure ou la grille pourraient venir en appui en cas d'une déformation importante du pare-choc due à un choc très violent.

Par ailleurs, on entend par grille d'entrée d'air, la pièce située au dessus de la bordure inférieure du pare-chocs, au travers de laquelle de l'air peut pénétrer derrière le pare-chocs. Une pièce comprenant la grille peut se prolonger vers le bas, derrière la bordure inférieure. Ce prolongement n'est pas considéré comme une grille dans la mesure où de l'air ne le traverse pas, même si le prolongement est réalisé d'un seul tenant avec la grille.

Dans l'invention, l'arrière de la bordure inférieure et l'arrière de la grille d'entrée d'air sont aptes à prendre appui contre des pièces de transmission d'efforts. Or, la grille est située au dessus de la bordure inférieure. Par conséquent, les surfaces d'appui des deux pièces de transmission d'efforts, respectivement contre l'arrière de la bordure inférieure et contre l'arrière de la grille, sont situées sensiblement à la verticale l'une de l'autre.

Un pare-chocs selon l'invention peut en outre comprendre une ou plusieurs des caractéristiques suivantes.
- Le pare-chocs comprend une unique pièce de transmission d'efforts agencée pour former un appui, à la fois pour la bordure inférieure et pour la grille.
- Le pare-chocs comprend en outre un guide d'air sensiblement horizontal formant la pièce de transmission d'efforts, le guide d'air étant agencé pour prolonger la bordure vers l'arrière et comprenant des moyens de fixation à la structure du véhicule, par exemple à une traverse inférieure, à un longeron ou à un berceau moteur. Le guide d'air est parfois également appelé convergent ou déflecteur. Le guide d'air a notamment pour fonctions, d'une part de canaliser l'air sous l'avant du véhicule automobile et d'éviter qu'il ne remonte dans le compartiment moteur et, d'autre part, de guider l'air à l'intérieur du compartiment moteur vers le radiateur.
- Le guide d'air comprend au moins une nervure de rigidification pour s'opposer à son flambement lorsqu'il transmet des efforts.
- La grille comprend au moins un barreau, ce barreau et au moins une nervure du guide d'air étant agencés pour s'appuyer directement l'un sur l'autre.
- Le pare-chocs est agencé de sorte que lorsque la nervure est en appui contre le barreau, la nervure et le barreau appartiennent sensiblement à un même plan, le plan étant de préférence vertical et longitudinal au véhicule, lorsque le pare-chocs est monté sur le véhicule.
- Le barreau comprend une rainure dans laquelle vient s'encastrer la nervure.
   Ainsi, la nervure est maintenue en position transversalement.
- Le guide d'air est rapporté sur la bordure.
- Le guide d'air est venu de moulage avec la bordure.
- Le guide d'air est relié à la bordure par une zone de pliage agencée de sorte que le guide d'air et la bordure sont mobiles l'un par rapport à l'autre par pliage de la zone de pliage entre :
   o une position de moulage, dans laquelle le guide d'air et la bordure ne sont en contact l'un avec l'autre que par l'intermédiaire de la zone de pliage,
   o une position de montage, dans laquelle la bordure et la grille s'appuient sur le guide d'air.

Dans la position de montage, une partie du guide d'air est en appui sur la bordure et sur la grille. Généralement, la bordure présente un profil en forme de C qui est fermé par la partie du guide d'air en appui sur la grille. Il existe alors, à l'intérieur de la forme en C, une cavité qui peut être difficile à mouler. Grâce au fait que le guide d'air est relié à la bordure par une zone de pliage, il est possible de mouler l'ensemble de la pièce d'une manière relativement aisée du fait que, dans la position de moulage, la cavité est ouverte et n'est pas refermée par les nervures.
- Le pare-chocs est conformé de sorte que, lorsqu'il est dans la position de moulage, il peut être démoulé selon une unique direction de démoulage. Ainsi, le pare-chocs peut être fabriqué de manière simple et démoulé selon une unique direction, c'est-à-dire sans qu'il soit nécessaire de réaliser des déplacements du pare-chocs dans le moule.
- Le pare-chocs comprend d'une part une armature d'un seul tenant intégrant la bordure, la grille et l'un ou plusieurs des éléments de l'ensemble constitué par le guide d'air, un absorbeur de choc, des moyens de fixation pour un optique, des moyens de fixation pour un capteur, et d'autre part, une peau recouvrant au moins partiellement l'armature en laissant visibles la bordure et la grille.

- La bordure présente un profil en C.
- La bordure et la grille sont dimensionnées pour transmettre les efforts d'un choc avec un bas de jambe de piéton selon les prescriptions techniques définies par la directive 2005/66/CE du Parlement Européen et du Conseil du 26 octobre 2005.
- Le pare-chocs est agencé de sorte qu'en cas de choc avec le tibia d'un piéton, la bordure inférieure et/ou l'arrière de la grille d'entrée d'air s'enfonce longitudinalement de moins de 0,5 centimètre avant de prendre appui contre la pièce de transmission d'efforts respective. Ainsi, la pièce de transmission d'efforts est située derrière la bordure inférieure ou derrière l'arrière de la grille d'entrée d'air, en référence à une direction longitudinale au véhicule. La pièce de transmission d'efforts est très proche de la bordure inférieure ou de la grille d'entrée d'air de sorte qu'en cas de choc, la reprise d'efforts par la pièce de transmission d'efforts est quasiment instantanée ce qui lui permet de s'opposer rapidement à l'enfoncement du pare-chocs.
- Le pare-chocs est agencé de sorte que la bordure inférieure et/ou l'arrière de la grille d'entrée d'air prend appui contre la pièce de transmission d'efforts respective, lorsque le pare-chocs est au repos. Dans ce cas, la reprise d'efforts par la pièce de transmission d'efforts est instantanée en cas de choc.

L'invention sera mieux comprise à la lecture de la description qui va suivre, donnée uniquement à titre d'exemple et faite en se référant aux dessins dans lesquels :
- la figure 1 est une vue en perspective d'un demi pare-chocs selon l'invention comprenant une peau et une armature ;
- la figure 2 est une vue en perspective de l'avant de la demi-armature de la figure 1 ;
- la figure 3 est une vue en perspective de l'arrière de la demi-armature de la figure 2 ;
- les figures 4, 5 et 6 des sections selon IV-IV de l'armature des figures 2 et 3, au cours de sa fabrication.

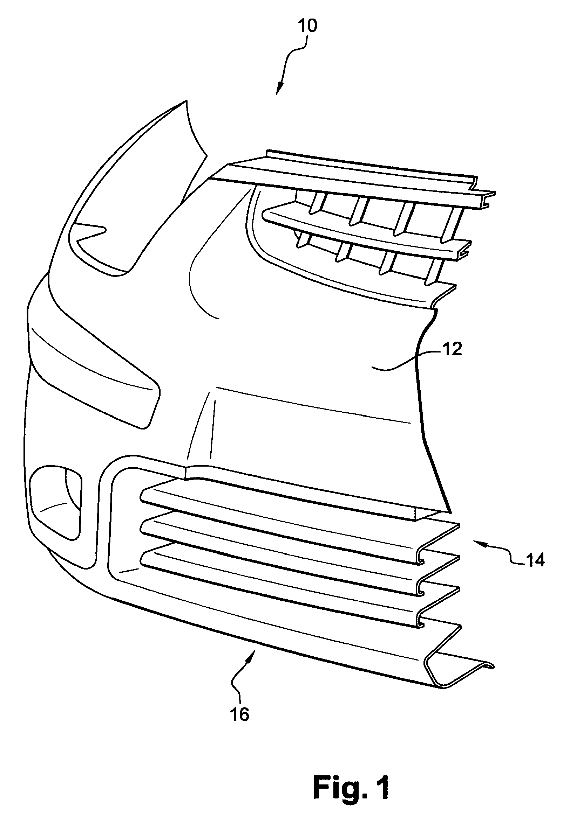

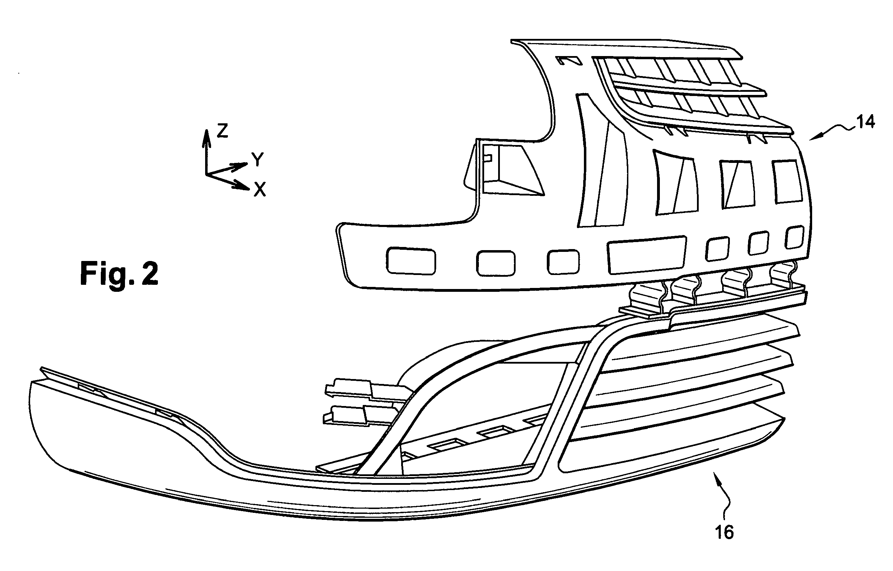

On a représenté sur la figure 1 la moitié d'un pare-chocs selon l'invention vu de devant. Le pare-chocs est désigné par la référence générale 10. Ce pare-chocs comprend notamment une peau 12 recouvrant en partie une armature 14. Sur les figures 1 à 3, seule la moitié de l'armature 14 est représentée.

On définit un repère XYZ tel que la direction X est parallèle à la direction longitudinale du véhicule, la direction Y est transversale au véhicule et la direction Z est sensiblement verticale.

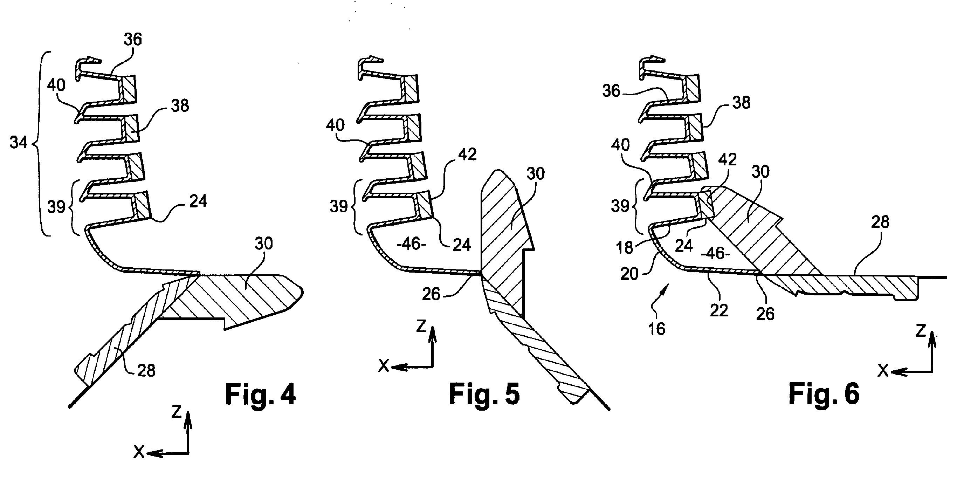

L'armature 14 comprend une bordure inférieure 16 constituant une partie inférieure du pare-chocs 10 et présentant un profil en C visible sur la figure 6. La bordure 16 comprend une paroi supérieure 18 sensiblement horizontale, une paroi médiane 20, raccordée à la paroi supérieure 18, sensiblement verticale et ayant une face extérieure immédiatement visible depuis l'avant du pare-chocs et une paroi inférieure 22, raccordée à la paroi médiane 20, sensiblement horizontale.

Les parois supérieure 18 et inférieure 22 sont respectivement terminées par des bords 24 et 26 à l'opposé de la paroi médiane 20.

Le pare-chocs 10 comprend en outre, venu de matière avec la bordure 16, un guide d'air 28 comprenant des nervures, agencé pour prolonger la paroi inférieure 22 vers l'arrière. Le guide d'air 28, sensiblement horizontal, constitue une pièce de transmission d'efforts à la structure du véhicule. A cet effet, il comprend des moyens de fixation avec une traverse (non-représentée) de la structure du véhicule sous forme d'orifices 29.

Des nervures longitudinales 30 sont dans un plan vertical XZ et deux nervures transversales parallèles 32, l'une avant, l'autre arrière, forment un angle d'environ 45° avec l'axe Z. Ces deux nervures 32 ont une fonction d'entretoisement des nervures longitudinales 30.

L'armature 14 comprend en outre, venue de matière, une grille d'entrée d'air 34 située au dessus de la bordure 16 de sorte que la grille 34 est en contact avec la paroi supérieure 18 de la bordure 16. La grille 34 comprend des barreaux horizontaux 36 et des barreaux verticaux 38.

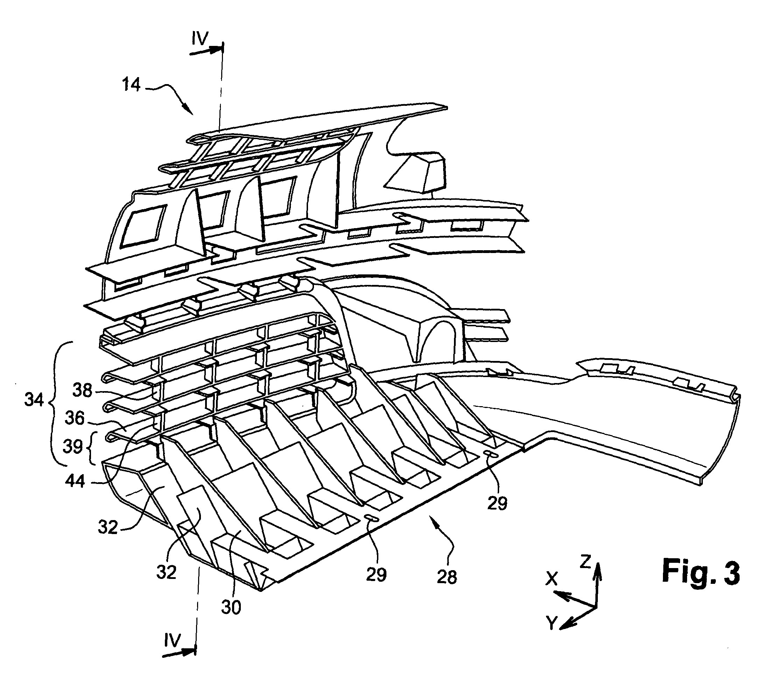

Le guide d'air 28 et la partie inférieure 39 de la grille 34 sont agencés de sorte que l'avant 40 de la grille 34 vient sensiblement à la verticale de la paroi médiane 20 de la bordure et de sorte que l'arrière 42 de la partie inférieure 39 constituée par les barreaux verticaux 38, et les nervures 30 du guide d'air 28 s'appuient directement l'un sur l'autre comme représenté sur la figure 3. Ainsi, lorsque la nervure est en appui contre le barreau, la nervure et le barreau appartiennent sensiblement au plan X-Z. Pour que les nervures 30 soient correctement positionnées contre les barreaux verticaux 38, ces derniers sont dotés de rainures 44 sensiblement verticales dans lesquelles s'encastrent les nervures 30. Les rainures 44 sont formées sur toute la hauteur des barreaux 38 bien qu'elles ne servent que dans la partie inférieure 39.

Par ailleurs, les nervures longitudinales 30 et la bordure 16 sont agencées de manière à ce que les nervures 30 et les bords 24 et 26 s'appuient directement l'un sur l'autre.

Ainsi, lors d'un choc d'un tibia (non-représenté) d'un bas de jambe de piéton avec le pare-chocs 10, le tibia impacte à la fois la paroi médiane 20 de la bordure 16 et l'avant 40 de la grille 34. La bordure 16 et la grille 34 transmettent respectivement une partie des efforts au guide d'air 28 par l'intermédiaire des nervures 30 qui sont en contact avec l'arrière 42 des barreaux verticaux 38 et avec les bords 24 et 26 de la bordure. Le guide d'air transmet ces efforts à la structure du véhicule.

Pour réduire l'enfoncement de la bordure en cas de chocs, les parois supérieure 18 et inférieure 22 sont plus épaisses que celles constituant le reste du pare-chocs.

La nervure transversale avant 32 du guide d'air 28 est en contact avec la face intérieure de la paroi supérieure 18 de la bordure. Ainsi, cette nervure 32 a une double fonction d'entretoisement des deux parois 18 et 22, les évitant ainsi de se rapprocher, notamment en cas de choc et de maintien de la bordure à la hauteur du guide d'air l'empêchant de passer en dessous en cas de choc.

Comme cela est représenté sur les figures 3 et 6, les parois 18, 20 et 22 et la nervure 32 définissent une cavité 46.

Le guide d'air 28 est relié à la paroi inférieure 22 par une zone de pliage située au niveau du bord 26.

Cette zone est agencée de sorte que le guide d'air 28 et la bordure 16 sont mobiles l'un par rapport à l'autre par pliage de la zone de pliage entre une position de moulage représentée sur la figure 4, dans laquelle le guide d'air et la bordure 16 ne sont en contact l'un avec l'autre que par l'intermédiaire de la zone de pliage, et une position de montage représentée sur la figure 6, dans laquelle la bordure et la grille s'appuient sur les nervures verticales du guide d'air. En outre, dans la position de moulage de la figure 4, l'ensemble de l'armature 14 peut être démoulé selon une unique direction de démoulage 56 représentée sur la figure 4. Cette direction de démoulage est sensiblement horizontale. Ainsi, cette armature peut être moulée en une seule opération, qui est particulièrement simple puisqu'elle ne nécessite pas d'effectuer des mouvements de la pièce dans le moule.

Du fait que la cavité 46 ne contient aucune nervure, et que les parois 18, 20 et 22 sont lisses, la partie inférieure du pare-chocs 10 présente un aspect esthétique lisse sans retassure.

## Revendications

1. Pare-chocs (10) en matière plastique d'un véhicule automobile, **caractérisé en ce qu'**il comprend :
- une bordure inférieure (16),
- une grille (34) d'entrée d'air située au dessus de la bordure (16), la grille (34) comprenant au moins une partie (39) dont l'avant (40) vient sensiblement à la verticale de la bordure inférieure (16),la grille (34) comprenant au moins un barreau (36, 38) à son extrémité arrière,
- une pièce (28) de transmission d'efforts à la structure du véhicule, agencée de sorte qu'en cas de choc du pare-chocs avec un tibia d'un bas de jambe de piéton, la bordure inférieure (16) et l'arrière (42) de la grille (34) prennent appui contre cette pièce pour transmettre à la structure une partie des efforts résultant du choc, la pièce (28) étant formée par un guide d'air sensiblement horizontal, agencé pour prolonger la bordure (16) vers l'arrière et comprenant des moyens de fixation à la structure du véhicule, le guide d'air (28) comprenant au moins une nervure (30, 32) de rigidification pour s'opposer à son flambement lorsqu'il transmet des efforts,
le barreau (38) de la grille et au moins une nervure (30) du guide d'air (28) étant agencés pour s'appuyer directement l'un sur l'autre.

2. Pare-chocs (10) selon la revendication précédente, agencé de sorte que lorsque la nervure (30) est en appui contre le barreau (38), la nervure (30) et le barreau (38) appartiennent sensiblement à un même plan, le plan étant de préférence vertical et longitudinal au véhicule, lorsque le pare-chocs (10) est monté sur le véhicule.

3. Pare-chocs (10) selon la revendication précédente, dans lequel le barreau (38) comprend une rainure (44) dans laquelle vient s'encastrer la nervure (30).

4. Pare-chocs (10) selon l'une quelconque des revendications précédentes, dans lequel le guide d'air (28) est rapporté sur la bordure (16).

5. Pare-chocs (10) selon l'une quelconque des revendications 1 à 3, dans lequel le guide d'air (28) est venu de moulage avec la bordure (16).

6. Pare-chocs (10) selon la revendication précédente, dans lequel le guide d'air (28) est relié à la bordure (16) par une zone de pliage agencée de sorte que le guide d'air (28) et la bordure (16) sont mobiles l'un par rapport à l'autre par pliage de la zone de pliage entre :
- une position de moulage, dans laquelle le guide d'air (28) et la bordure (16) ne sont en contact l'un avec l'autre que par l'intermédiaire de la zone de pliage,
- une position de montage, dans laquelle la bordure (16) et la grille (34) s'appuient sur le guide d'air (28).

7. Pare-chocs (10) selon la revendication précédente, conformé de sorte que, lorsqu'il est dans la position de moulage, il peut être démoulé selon une unique direction (X) de démoulage.

8. Pare-chocs (10) selon l'une quelconque des revendications précédentes, comprenant d'une part une armature (14) d'un seul tenant intégrant la bordure (16), la grille (34) et l'un ou plusieurs des éléments de l'ensemble constitué par le guide d'air (28), un absorbeur de choc, des moyens de fixation pour un optique, des moyens de fixation pour un capteur, et d'autre part, une peau (12) recouvrant au moins partiellement l'armature (14) en laissant visibles la bordure (16) et la grille (34).

9. Pare-chocs (10) selon l'une quelconque des revendications précédentes, dans lequel la bordure (16) présente un profil en C.

10. Pare-chocs selon l'une quelconque des revendications précédentes, agencé de sorte qu'en cas de choc avec le tibia d'un piéton, la bordure inférieure (16) et/ou l'arrière (42) de la grille d'entrée d'air s'enfonce longitudinalement de moins de 0,5 centimètre avant de prendre appui contre la pièce de transmission d'efforts respective.

11. Pare-chocs selon l'une quelconque des revendications précédentes, agencé de sorte que la bordure inférieure et/ou l'arrière de la grille d'entrée d'air prend appui contre la pièce de transmission d'efforts respective, lorsque le pare-chocs est au repos.

## Claims

1. Plastic bumper (10) of an automotive vehicle, **characterised in that** it includes:
- a lower border (16),
- an air inlet grille (34) located above the border (16), the grille (34) comprising at least one part (39) whose front (40) is substantially vertically above the lower border (16), the grille (34) comprising at its rear end at least one bar (36, 38),
- a part (28) for transmitting forces to the vehicle structure, designed so that if the bumper hits a pedestrian's tibia, the lower border (16) and the rear (42) of the grille (34) bear against this part to transmit to the structure a part of the forces resulting from the impact, the part (28) being formed by a substantially horizontal air guide, designed to extend the border (16) to the rear and comprising means for attachment to the vehicle structure, the air guide (28) comprising at least one stiffening rib (30, 32) to prevent it from buckling when it transmits forces,
the bar (38) of the grille and at least one rib (30) of the air guide (28) being designed so that they rest directly against each other.

2. Bumper (10) according to the preceding claim, designed so that when the rib (30) is resting against the bar (38), the rib (30) and the bar (38) are substantially in the same plane, the plane preferably being vertical and longitudinal to the vehicle, when the bumper (10) is mounted on the vehicle.

3. Bumper (10) according to the preceding claim, wherein the bar (38) comprises a groove (44) in which the rib (30) fits.

4. Bumper (10) according to any of claims 1 to 3, wherein the air guide (28) is fastened to the border (16).

5. Bumper (10) according to any of claims 1 to 3, wherein the air guide (28) is moulded with the border (16).

6. Bumper (10) according to the preceding claim, wherein the air guide (28) is connected to the border (16) by a folding area designed so that the air guide (28) and the border (16) can move with respect to each other by folding the folding area between:
- a moulding position, in which the air guide (28) and the border (16) only touch each other via the folding area,
- an assembly position, in which the border (16) and the grille (34) rest on the air guide (28).

7. Bumper (10) according to the preceding claim, shaped so that, when it is in the moulding position, it can be demoulded in a single demoulding direction (X).

8. Bumper (10) according to any of the preceding claims, comprising firstly a monobloc armature (14) including the border (16), grille (34) and one or more components of the assembly formed by the air guide (28), a shock absorber, means for attaching a headlight, means for attaching a sensor and, secondly, a skin (12) covering the armature (14) at least partially and leaving the border (16) and the grille (34) visible.

9. Bumper (10) according to any of the preceding claims, wherein the border (16) has a C-shaped profile.

10. Bumper (10) according to any of the preceding claims, designed so that in case of impact with a pedestrian's tibia, the lower border (16) and/or the rear (42) of the air inlet grille move longitudinally less than 0.5 centimetres before coming up against the respective part for transmitting forces.

11. Bumper according to any of the preceding claims, designed so that the lower border and/or the rear of the air inlet grille bear against the respective part for transmitting forces, when the bumper is at rest.

## Patentansprüche

1. Stoßdämpfer (10) aus Kunststoff eines Kraftfahrzeugs, **dadurch gekennzeichnet, dass** er Folgendes aufweist:
- eine untere Kante (16),
- ein Lufteingangsgitter (34), das sich oberhalb der Kante (16) befindet, wobei das Gitter (34) mindestens einen Teil (39) aufweist, dessen Vorderbereich (40) im Wesentlichen an der Senkrechten der unteren Kante (16) liegt, wobei das Gitter (34) mindestens eine Stange (36, 38) an seinem hinteren Ende aufweist,
- ein Teil (28) zum Übertragen von Kräften auf die Struktur des Fahrzeugs, derart eingerichtet, dass im Fall eines Stoßes des Stoßdämpfers gegen ein Schienbein eines Unterschenkels eines Fußgängers die untere Kante (16) und die Rückseite (42) des Gitters (34) gegen dieses Teil zum Anliegen kommen, um der Struktur einen Teil der Kräfte, die sich aus dem Stoß ergeben, zu übertragen, wobei das Teil (28) von einer im Wesentlichen horizontalen Luftführung gebildet ist und eingerichtet ist, um die Kante (16) nach hinten zu verlängern und Mittel zum Befestigen an der Struktur des Fahrzeugs aufweist, wobei die Luftführung (28) mindestens eine Rippe (30, 32) zum Versteifen aufweist, um sich ihrem Knicken zu widersetzen, wenn sie Kräfte überträgt,
wobei die Stange (38) des Gitters und mindestens eine Rippe (30) der Luftführung (28) eingerichtet sind, um sich direkt aneinander abzustützen.

2. Stoßdämpfer (10) nach dem vorhergehenden Anspruch, der derart eingerichtet ist, dass, wenn die Rippe (30) gegen die Stange (38) abstützt, die Rippe (30) und die Stange (38) im Wesentlichen zu einer gleichen Ebene gehören, wobei die Ebene vorzugsweise senkrecht und längs zum Fahrzeug ist, wenn der Stoßdämpfer (10) an das Fahrzeug montiert ist.

3. Stoßdämpfer (10) nach dem vorhergehenden Anspruch, bei dem die Stange (38) eine Rille (44) aufweist, in die sich die Rippe (30) fügt.

4. Stoßdämpfer (10) nach einem der vorhergehenden Ansprüche, bei dem die Luftführung (28) an die Kante (16) angebaut ist.

5. Stoßdämpfer (10) nach einem der Ansprüche 1 bis 3, bei dem die Luftführung (28) mit der Kante (16) gemeinsam geformt wird.

6. Stoßdämpfer (10) nach dem vorhergehenden Anspruch, bei dem die Luftführung (28) mit der Kante (16) durch einen Faltbereich verbunden ist, der derart angeordnet ist, dass die Luftführung (28) und die Kante (16) zueinander durch Falten des Faltbereichs beweglich sind zwischen:
- einer Formposition, in der die Luftführung (28) und die Kante (16) miteinander nur über den Faltbereich in Berührung sind,
- eine Montageposition, in der die Kante (16) und das Gitter (34) an der Luftführung (28) abstützen.

7. Stoßdämpfer (10) nach dem vorhergehenden Anspruch, der derart ausgebildet ist, dass er, wenn er in der Formposition ist, entlang einer einzigen Abformrichtung (X) abgeformt werden kann.

8. Stoßdämpfer (10) nach einem der vorhergehenden Ansprüche, der einerseits eine Bewehrung (14) aus einem einzigen Stück, zu dem die Kante (16), das Gitter (34) und eines oder mehrere der Elemente gehören, die aus der Luftführung (28), einem Stoßabsorber, Befestigungsmitteln für eine Optik, Befestigungsmitteln für einen Sensor bestehen und, andererseits, eine Verkleidung (12) aufweist, die die Bewehrung (14) mindestens teilweise abdeckt und die Kante (16) und das Gitter (34) sichtbar lässt, aufweist.

9. Stoßdämpfer (10) nach einem der vorhergehenden Ansprüche, bei dem die Kante (16) ein Profil in C-Form aufweist.

10. Stoßdämpfer (10) nach einem der vorhergehenden Ansprüche, der derart eingerichtet ist, dass sich die untere Kante (16) und/oder die Rückseite (42) des Lufteingangsgitters bei einem Stoß gegen das Schienbein eines Fußgängers längs um mindestens 0,5 Zentimeter eindrückt, bevor er/sie zum Aufliegen gegen das jeweilige Teil zum Übertragen von Kräften kommt.

11. Stoßdämpfer (10) nach einem der vorhergehenden Ansprüche, der derart eingerichtet ist, dass die untere Kante und/oder die Rückseite des Lufteingangsgitters gegen das jeweilige Teil zum Übertragen von Kräften zum Anliegen kommt, wenn der Stoßdämpfer in Ruhestellung ist.
